Europäisches Patentamt

**European Patent Office**

**Office européen des brevets**

(19)

(11) Publication number: **0 049 227**
**A1**

(12)

# EUROPEAN PATENT APPLICATION

(21) Application number: **81830172.3**

(22) Date of filing: **23.09.81**

(51) Int. Cl.³: **A 61 G 5/00,** B 60 P 1/00, B 60 R 3/02

(30) Priority: **26.09.80 IT 352380**

(43) Date of publication of application: **07.04.82**
**Bulletin 82/14**

(84) Designated Contracting States: **DE FR GB**

(71) Applicant: **CARROZZERIA GRAZIA OLIVIERO DI GRAZIA OLIVIERO & CO. S.n.c., Via Cimabue, 12, I-40133 Bologna (IT)**

(72) Inventor: **Grazia, Oliviero, Via Cimabue, 12, 40133 Bologna (IT)**

(74) Representative: **Lanzoni, Luciano, c/o BUGNION S.p.A. Via Farini, 37, I-40124 Bologna (IT)**

(54) **A vehicle footboard or inclined loading platform.**

(57) The vehicle footboard or inclined loading platform comprises a rectangular frame (1), to the top part of which is fixed a transiting platform (8), that slides in a direction perpendicular to the side of the vehicle, in guides (3) made in the bottom of the chassis thereof. The said frame (1) is provided bilaterally with racks (7) that mesh with corresponding pinions that are also inserted underneath the vehicle and are powered by an electric motor in such a way as to cause the footboard to project partially or almost fully. The said transiting platform (8), hinged to the front of the frame (1), is able to adopt two extreme positions: the first, resting on the partially projecting frame, constitutes a step, whilst the second, with the frame almost fully projecting, forms an inclined loading platform that can be positioned on a slant with respect to the frame, the latter, in turn, being automatically inclinable towards the ground level.

A vehicle footboard or inclined loading platform

The invention relates to a vehicle footboard or inclined loading platform.

As is known, with particular reference to the motor cars and vans that ply for public hire, the problem exists of how to enable loads that are of a considerable weight, or more specifically, carriages occupied by people unable to walk, to gain access to the inside of the vehicle.

The object of the invention is to overcome the aforementioned problem through the realization of a vehicle footboard or inclined loading platform with which access to the inside of the vehicle can easily be gained. This applies in particular to carriages occupied by invalids.

This object has been attained by the vehicle footboard or inclined loading platform according to the invention that comprises: a rectangular frame that slides in a direction perpendicular to the side of the vehicle, in guides integral with the bottom of the chassis thereof, the said frame being provided bilaterally with racks that mesh with corresponding pinions, fixedly mounted underneath the chassis of the vehicle and powered by an electric motor housed inside the body of the vehicle, in such a way as to cause the said frame to project partially or almost fully and to subsequently return inwards; and a transiting platform, fixed to the said frame, hinged to the front part thereof so that the said transiting platform can adopt two extreme positions, the first of which horizontal, resting on the said frame in the position in which this is fully or partially inserted inside the said guides, and in the latter instance constituting a step, the second extreme position being inclined with respect to the said frame, and constituting, when the frame is almost fully projecting, an inclined loading platform for which a pair of lateral support members are provided in order to maintain the said transiting platform stable when it is in the said second inclined position.

Further characteristics and advantages of the invention will become more obvious from the detailed description that follows of one preferred but not sole form of embodiment, illustrated purely as an unlimited example on the accompanying drawings, in which:

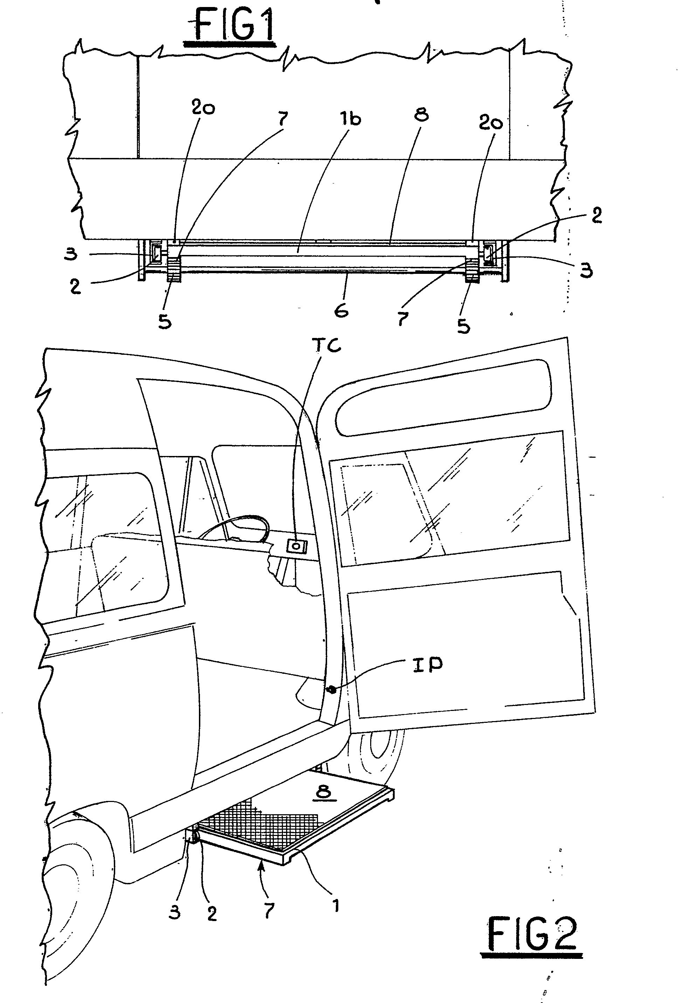

Figure 1 shows, in a front view, the footboard according to the invention, fully retracted within the body of the vehicle;

Figure 2 shows the footboard in question in the position in which it serves as a step;

Figure 3 shows the footboard in question in the almost fully projecting position, at a time preceding the constitution of the loading platform;

Figure 4 shows the footboard in question in the position in which it serves as a loading platform;

Figure 5 shows the footboard in question, in a lateral diagrammatic view;

Figure 6 shows a possible block diagram for the supply circuit of the motor that controls the projection and retraction of the footboard in question.

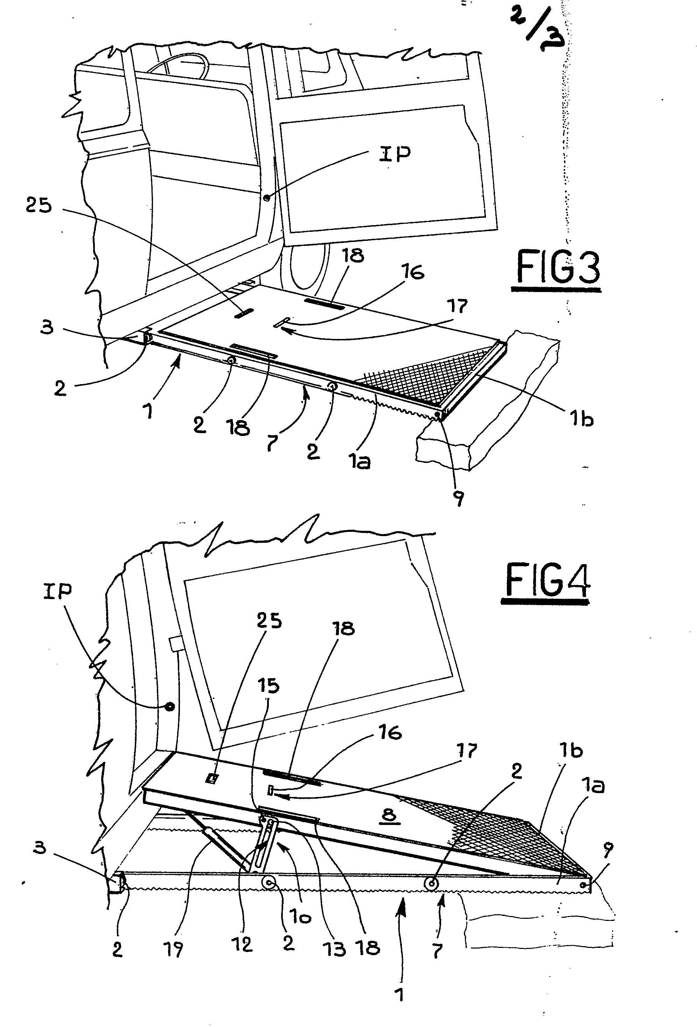

With particular reference to the figures listed above, the footboard according to the invention comprises a rectangular frame 1 constituted by a rectangular encompassing structure whose lateral longitudinal members 1a are provided, externally and laterally, with a number of rollers 2 that slide in guides 3 integral with the bottom of the chassis of the vehicle, the purpose of which is to enable the frame 1 to undergo sliding movements.  The said sliding movements of the frame 1 along the said guides 3, which take place in a direction perpendicular to the side of the vehicle, are powered by an electric motor MR which, through reduction means, carries in rotation a pair of pinions 5 mounted, one at each end, on one single cross shaft 6, the said pinions meshing with corresponding racks 7 provided along the lower part of the longitudinal members 1a.  To the frame 1 is fixed a transiting platform 8.  The latter is hinged to the former at 9 in such a way as to allow the transiting platform 8 to adopt two extreme positions:  the first, horizontal, resting on the said frame 1, is the static position in which the footboard projects and serves as a step (see Fig. 2), or the position normally envisaged when the frame 1 is retracted fully along the said guides 3;  the second extreme position that the transiting platform 8 can adopt is one in which it is inclined with respect to the frame 1 so as to constitute, with the latter almost fully projecting, an inclined loading platform (see Fig. 4).  With the said first position, problems do not arise since the transiting platform is provided with a suitable lateral border that rests physically on the frame 1.  The second position, achieved manually through the medium of a grasping slot 25, is, instead, rendered firm by a pair of lateral support elements 10, each of which constituted by a brace 11 pivoted to the corresponding longitudinal member 1a in the region of a point in between the front extremities 1b of the said frame.  The brace 11 has in it a longitudinal slit 12 in which engages a pin 13 that is integral with the transiting platform 8.  The said pin 13 slides in the said longitudinal slit 12 between two extreme positions.  A first extreme lowered position corresponds to the position in which the transiting platform 8 is resting on the frame 1.  A second extreme raised position corresponds to the position in which the transiting platform 8 is inclined. Each brace has in it, moreover, a hole 14 into which is destined to fit a latching bolt 15 fastened to the underneath surface of the transiting platform, the operation of which is by means of a lever 16 that can be moved from the outside through a slit 17 with which the said transiting platform 8 is provided.

The mechanism, not shown on the drawings, that causes the movement of the bolts 15, can be of the type that utilizes a cam device which, depending upon the displacement of the lever 16, causes the bolts 15 either to protrude or to retract. Note should be taken, furthermore, of the fact that, in the region of the braces 11, the transiting platform 8 is provided with channels 18, the presence of which is necessary since, at the time the transiting platform 8 is raised to constitute an inclined platform, the braces 11 almost immediately adopt a raised position. In this way, the said braces do not encounter interference on the transiting platform 8 since they are able to pass freely through the channels 18. Additionally, the transiting platform 8 is subjected to the action of a pair of ordinary, compressed air operated, jacks 19 that are provided, on one hand, to ease the raising of the transiting platform 8, and on the other, to determine automatically and with precision, the inclined platform configuration shown in figure 4, prior to the operation of the lever 16.

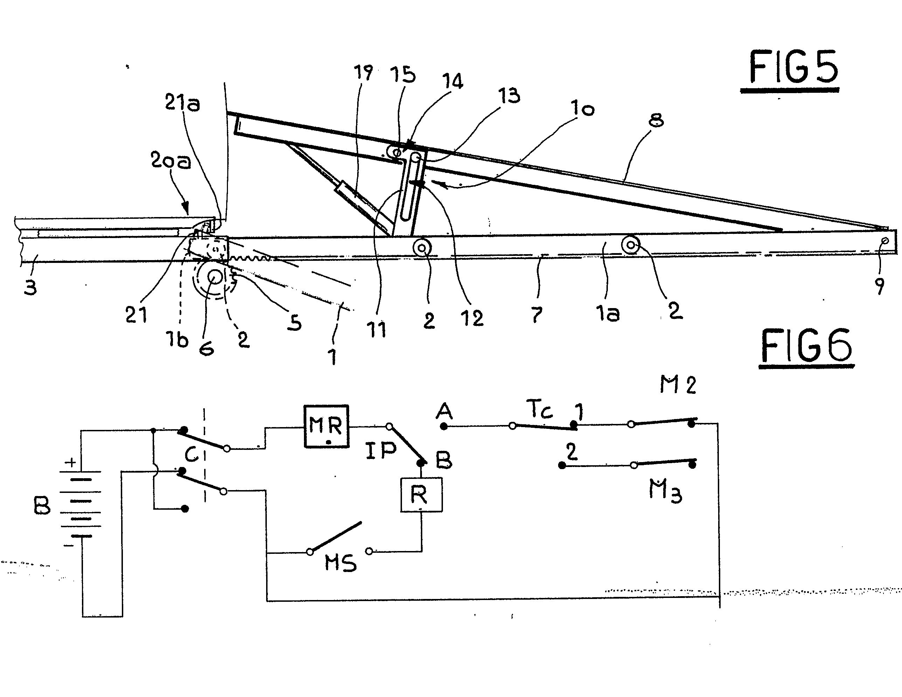

With particular reference to figure 5, it should be noted that the top part of the frame 1 is guided, at the time the said frame is projecting, by a locator member 20, the front part of which has a raised curvilinear section 20a in order to allow the frame 1 to undergo a rotation towards and down to the ground level, when it is almost fully projecting and, contemporaneously, to keep the aforementioned pinions 5 constantly meshing with their corresponding racks 7. In addition, in the region of the inside front extremity 1b, the frame 1 has at least one abutment 21 provided to cause the frame 1 to stop safely in its almost fully projecting position, by hitting against a corresponding abutment 21a with which the bottom part of the vehicle or the front extremity of the locator member 20, is provided.

Now, with particular reference to figure 6, a description will be given of the operation of the footboard according to the invention.

The motor MR is supplied by the battery of the vehicle via a relay C that is able to reverse the supply to the motor MR. The supply circuit in question comprises: a two-way switch IP inserted in the door post, a changeover switch TC on the dashboard of the vehicle, a first microswitch MS for halt.ing the retraction of the frame 1, and a second and third microswitch, M2 and M3, respectively, inserted in the plane along which the frame 1 slides.

Let it now be assumed that the changeover switch TC is in the position 1 illustrated in figure 6: when the door is opened, the switch IP is moved into position A in figure 6 and this causes the "making" of the supply circuit and thus the frame 1 to project until by its intercepting the said second microswitch M2, the motor halts, provided the latter mentioned microswitch is there for this purpose, and the frame is thus in the position in which it serves as a step. It should be noted that from the moment when the frame 1 has started to project, the microswitch MS is energized. With the subsequent closing of the door, the supply to the motor MR is reversed: the switch IP moves, in fact, into position B in figure 6 and, since the microswitch MS is energized, the block R that controls the reversal of the supply to the motor MR via the relay C, is
excited.

Once the frame 1 has fully retracted, the microswitch MS
"breaks" and the situation returns to its initial condition.

When the changeover switch TC is in the position 2 illustrated in figure 6, identical operations are carried out,
the sole difference being that, in this case, it is the
third microswitch M3 that is in operation, and not the second.

Claims:

1. A vehicle footboard or inclined loading platform comprising: a rectangular frame (1) that slides in a direction perpendicular to the side of the vehicle, in guides (3) integral with the bottom of the chassis thereof, the said frame (1) being provided bilaterally with racks (7) that mesh with corresponding pinions (5), fixedly mounted underneath the chassis of the vehicle and powered by an electric motor (MR) housed inside the body of the vehicle, in such a way as to cause the said frame (1) to project partially or almost fully and to subsequently return inwards; and a transiting platform (8), fixed to the said frame (1), hinged to the front part thereof so that the former can adopt two extreme positions, the first of which horizontal, resting on the said frame (1) in the position in which this is fully or partially inserted inside the said guides (3), and in the latter instance constituting a step, the second extreme position being inclined with respect to the said frame (1) and constituting, when this is almost fully projecting, an inclined loading platform for which a pair of lateral support members (10) are provided in order to maintain the said transiting platform (8) stable when in the said second inclined position.

2. A vehicle footboard or loading platform according to the preceding claim, wherein the said frame (1) is constituted by a rectangular encompassing structure whose lateral longitudinal members 1a are provided, externally and laterally, with a number of rollers (2) with which to enable the said frame (1) to slide inside the said guides (3), while the lower part of the said lateral longitudinal members (1a) is provided with the said racks (7) with which mesh the said pinions (5) that are mounted, one at each end, on one single cross shaft (6), and only one of which is driven by the said electric motor (MR).

3. A vehicle footboard or inclined loading platform according to the preceding claims, wherein the projection of the said frame (1) is guided at the top by a locator member (20), the front part of which has a raised curvilinear section (20a) in order to allow the frame (1) to undergo, contemporaneously, a rotation towards and down to the ground level, when the said frame (1) is almost fully projecting and to keep the aforementioned pinions (5) constantly meshing with their corresponding racks (7).

4. A vehicle footboard or inclined loading platform according to the preceding claims, wherein the frame (1) has, in the region of the inner front extremity (1b) thereof, at least one abutment (21) provided to cause the frame (1) to stop safely in its almost fully projecting position.

5. A vehicle footboard or inclined loading platform according to the preceding claims, wherein each of the lateral support elements (10) of the said transiting platform (8) is constituted by a brace (11) pivoted to the corresponding longitudinal member (1a) of the said frame in the region of a point in between the front extremities (1b) of the said frame (1), that has in it a longitudinal slit (12) in which engages a pin (13) that is integral with the said transiting platform (8), the said pin sliding therein from a first extreme lowered position corresponding to the position in which the said transiting platform (8) is resting on the frame (1), to a second extreme raised position corresponding to the position in which the said transiting platform (8) is inclined, each brace (11) having, moreover, a hole (14) in it into which is destined to fit a latching bolt (15), fastened to the underneath surface of the said transiting platform (8), the operation of which is by means of a lever (16) that can be moved from the outside through a slit (17) with which the said transiting platform (8) is provided.

6. A vehicle footboard or inclined loading platform according to Claim 5, wherein the said transiting platform (8) is subjected to the action of thrust means (19) that are fixed to both sides of the said frame (1) and are provided to position the said transiting platform (8) exactly in its inclined loading platform configuration.

7. A vehicle footboard or inclined loading platform according to the preceding claims, wherein the supply circuit of the said electric motor (MR), connected to the battery (B) of the vehicle, comprises: a two-way switch (IP) inserted in the door post, a changeover switch (TC) on the dashboard of the vehicle, a first microswitch (MS) for halting the retraction of the frame (1), and a second and third microswitch, (M2) and (M3), respectively, inserted in the plane along which the said frame (1) slides; when the door is opened, with the said changeover switch (TC) in the projecting step position, the said two-way switch (IP) causes the said frame (1) to project until by its intercepting the said second microswitch (M2), the said motor (MR) halts, and the said frame (1) is thus in the position in which it serves as a step, whilst when the door is shut, the supply of the said motor (MR) is reversed and the said frame (1) is caused to retract until by its intercepting the said first microswitch (MS), the motor (MR) is halted and the said frame (1) is thus fully retracted; when the door is opened with the said changeover switch (TC) in the loading platform projection position, identical operations are carried out, the sole difference being that in this case it is the third microswitch (M3) that is in operation, and not the second microswitch (M2).

## FIG1

## FIG2

IP

25

3

2

1

2

18

7

2

1a

16

17

1b

9

**FIG3**

IP

25

18

15

16

17

1b

2

1a

3

2

19

12

10

2

13

18

8

9

7

1

**FIG4**

## FIG 5

## FIG 6

European Patent Office

**EUROPEAN SEARCH REPORT**

EP 81 83 0172.3

## DOCUMENTS CONSIDERED TO·BE RELEVANT

| Category | Citation of document with indication, where appropriate, of relevant passages | Relevant to claim |
|---|---|---|
| | BE - A - 837 761 (LA BRUGEOISE ET NI-VELLES) <br> * fig. 9 to 11 * <br> -- | 1 |
| | US - A - 1 717 303 (W. BARCLAY) <br> * complete document * <br> -- | 1 |
| | US - A - 1 884 513 (W. BARCLAY) <br> * complete document * <br> -- | 1 |
| | US - A - 4 185 849 (W.J. JAEGER) <br> * fig. 2 * <br> -- | 1 |
| | WO - A1 - 80/01266 (D.L. MANNING) <br> * complete document * <br> ---- | 1 |

**CLASSIFICATION OF THE APPLICATION** (Int. Cl.³)

A 61 G 5/00
B 60 P 1/00
B 60 R 3/02

**TECHNICAL FIELDS SEARCHED** (Int. Cl.³)

A 61 G 5/00
B 60 P 1/00
B 60 P 3/00
B 60-R 3/00
B 62 D 25/00

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

| | The present search report has been drawn up for all claims | |
|---|---|---|
| **Place of search** Berlin | **Date of completion of the search** 10-12-1981 | **Examiner** BECKER |

EPO Form 1503.1 06.78